# EUROPEAN PATENT APPLICATION

(11) **EP 3 249 933 A1**
(43) Date of publication of application: **29.11.2017**
(21) Application number: 16382229.9
(22) Date of filing: 25.05.2016
(51) Int. Cl.: H04N 21/258, H04L 1/00, H04N 21/262, H04N 21/414, H04N 21/433, H04N 21/45, H04N 21/472, H04N 21/488, H04N 21/6543, H04N 21/845

(54) **METHOD AND DEVICE FOR TRANSMISSION OF VIDEO CONTENT**

(71) Applicant: Alcatel-Lucent España, S.A., 28050 Madrid (ES)
(72) Inventor: PEREZ GARCIA, Pablo, 28050 Madrid (ES); RUIZ ALONSO, Jaime Jesús, 28050 Madrid (ES); VILLEGAS NUÑEZ, Alvaro, 28050 Madrid (ES)
(74) Representative: Herrero & Asociados, S.L.

(57) **Abstract**

Embodiments relate to a method for transmission of video content, executed by a content transmission device (3), comprising:
- receiving (S1) a plurality of requests (RQ) from content consumption devices (2) though a cellular network (6), wherein a request (RQ) specifies a video portion of a video content and a cell identifier,
- for respective requests (RQ), determining (S2) a requested bitrate (BR) and a maximum available bitrate (BRₘₐₓ) associated with the requested video portion,
- for respective cell identifiers, determining (S3) statistical data (SD) representative of at least one of the number of content consumption devices (2) from which at least one request has been received during a time interval, requested bitrates during said time interval, differences between a requested bitrate and a maximum available bitrate during said time interval.

## Description

### FIELD OF THE INVENTION

The present invention relates to the field of telecommunications. In particular, the present invention relates to methods and devices for transmission of video content.

### BACKGROUND

Delivering video over a network with limited resources -and doing it with quality- is not an easy task. If the network is being used by many service providers and there is no centralized control on traffic or any kind of bandwidth allocation, the task is even harder. And if the properties of the network produce frequent changes in the utilization which are almost unpredictable, the task is a real challenge. Delivering video over a mobile (cell based) network is a perfect example of the last case: the throughput of the cell is limited, the amount of users sharing it may be very high, they may be retrieving content from very different sources and service providers, and its mobile nature produces frequent changes in the traffic, with users getting in and out of the cell in an almost unpredictable way.

The HTTP adaptive streaming protocols which are now being used in most new video platforms help in this area by adapting the bitrate of the content to the network conditions. However, that adaptation produces only limited benefits, mainly due to the pure client-side nature of the algorithms. When many end devices are competing for a scarce bandwidth in the same network the resulting quality of experience will highly depend on the aggressiveness of the adaptive algorithms and their combination. If the network becomes really congested, the experience will probably be bad for all of them, with long startup delays and often re-buffering video stalls.

### SUMMARY

It is thus an object of embodiments of the present invention to propose a method and a device for transmission of content, which do not show the inherent shortcomings of the prior art.

Accordingly, embodiments relate to a method for transmission of video content, executed by a content transmission device, comprising:
- receiving a plurality of requests from content consumption devices though a cellular network, wherein a request specifies a video portion of a video content and a cell identifier,
- for respective requests, determining a requested bitrate and a maximum available bitrate associated with the requested video portion,
- for respective cell identifiers, determining statistical data representative of at least one of the number of content consumption devices from which at least one request has been received during a time interval, requested bitrates during said time interval, differences between a requested bitrate and a maximum available bitrate during said time interval.

Correlatively, embodiments relates to a content transmission device, comprising means configured for:
- receiving a plurality of requests from content consumption devices though a cellular network, wherein a request specifies a video portion of a video content and a cell identifier,
- for respective requests, determining a requested bitrate and a maximum available bitrate associated with the requested video portion,
- for respective cell identifiers, determining statistical data representative of at least one of the number of content consumption devices from which at least one request has been received during a time interval, requested bitrates during said time interval, differences between a requested bitrate and a maximum available bitrate during said time interval.

The statistical data may specify a mean requested bitrate during said time interval, and/or a mean difference between a requested bitrate and a maximum available bitrate during said time interval.

The requested bitrate and maximum available bitrate may be determined in function of a manifest file which specifies available portions and bitrates for the video content.

Some embodiments comprise sending said statistical data to a control device and, in response to receiving a congestion signal which specifies a cell for which congestion has been detected or predicted from said control device, adapting transmission of video content in said cell.

Some embodiments comprise detecting and/or predicting congestion of a cell in function of said statistical data and, in response to said detecting or predicting, adapting transmission of video content in said cell.

Adapting transmission of video content in said cell may comprise at least one of:
- sending a video portion at a lower bitrate than requested by a content consumption device,
- not allowing new sessions for requesting video content,
- sending a modified manifest file to a content consumption device,
- harmonizing the bitrates delivered to respective content consumption devices.

A request may specify a signal strength.

Embodiments relate to a method for controlling transmission of video content, executed by a control device, comprising:
- receiving, from a content transmission device, statistical data associated with a cell identifier and representative of at least one of a number of content consumption devices from which at least one request has been received during a time interval, requested bitrates during said time interval, differences between a requested bitrate and a maximum available bitrate during said time interval,
- for respective cell identifiers, detecting and/or predicting congestion in function of said statistical data,
- in response to detecting and/or predicting congestion, sending a congestion signal to said content transmission device.

Correlatively, embodiments relate to a control device comprising means configured for:
- receiving, from a content transmission device, statistical data associated with a cell identifier and representative of at least one of a number of content consumption devices from which at least one request has been received during a time interval, requested bitrates during said time interval, differences between a requested bitrate and a maximum available bitrate during said time interval,
- for respective cell identifiers, detecting and/or predicting congestion in function of said statistical data,
- in response to detecting and/or predicting congestion, sending a congestion signal to said content transmission device.

Embodiments relate to a computer program comprising instructions for performing the method above when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a bloc diagram of a system for transmission of video content,
Figure 2 is a flowchart of a method for transmission of video content, executed in the system of Figure 1,
Figure 3 is a flowchart of a method for controlling transmission of video content, executed in the system of Figure 1, and
Figure 4 is a structural view of a device of the system of Figure 1.

### DESCRIPTION OF EMBODIMENTS

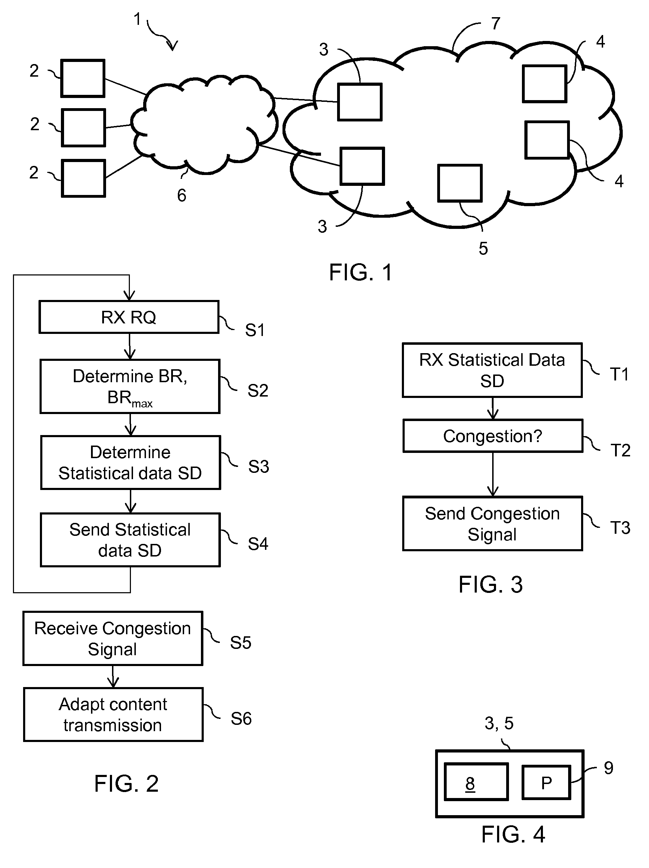

**Figure 1** is a bloc diagram of a system 1 for transmission of video content. The system 1 comprises one or more content consumption devices 2, one or more content transmission devices 3, one or more origin server 4, a control device 5 and a cellular network 6. The content transmission devices 3, origin servers 4 and control device 5 are part of a content delivery network 7.

In the system 1, the content consumption devices 2, the content transmission devices 3 and the origin server 4 use an HTTP adaptive streaming techniques, for example DASH, for transmission of video content from an origin server 4 to a content consumption device 2. Accordingly, a video content is partitioned in temporal video portions, called segments, and each segment is available in a plurality of bitrates. A manifest file associated with a video content specifies the available segments and bitrates. A video content may be a predetermined video content (such as movies, recordings...) or a live video content, in which case new segments are added in real time and the manifest file is updated accordingly.

The cellular network 6 comprises a plurality of cells associated with respective cell identifiers. The available bandwidth within a cell is shared between the content consumption devices 2 (and other terminals) associated with this cell. In the context of this document, a cell identifier refers to an object of the cellular network 6 wherein available bandwidth is shared between content consumption devices 2. For example, the cell identifier may correspond to the "Cell Identity", the "Cell Identifier", the "UTRAN Cell Identity"... (CID, C-Id, UC-Id...) specified in 3GPP or 3GPP2 Technical Standards for wireless cellular networks.

A content consumption device 2 may be a user terminal capable of obtaining video content through the cellular network 6 and of displaying the obtained video content. For example, a content consumption device 2 is a Smartphone, a tablet, a personal computer, a Smart TV... A content consumption device 2 obtains video content by sending requests for successive segments. For each segment, a rate determination algorithm selects a bitrate among the available bitrates specified by the manifest file, and the request specifies the segment in the selected bitrate. Moreover, in the system 1, the request specifies a cell identifier associated with the content consumption device 2.

In reaction to receiving a request from a content consumption device 2, a content transmission device 3 obtains the requested segment (in the appropriate bitrate), for example from a local cache, an origin server 4 or an intermediate content delivery node (not shown) of the content delivery network 7, and sends the obtained segment to the content consumption device 2. The content delivery network 7 may use techniques such as caching, prediction, pre-fetching, pushing... so that relevant segments are available at content transmission devices 3.

In the system 1, the content transmission devices 3 and the control device 5 cooperate to assess congestion in the cellular network 6 and take actions when congestion is detected or predicted, as described hereafter in more details with reference to Figures 2 and 3.

**Figure 2** is a flowchart of a method for transmission of content, executed by a content transmission device 3.

The content transmission device 3 receives requests RQ from a plurality of content consumption devices 2 (Step S1). As explained before, a request RQ specifies a segment and a cell identifier. The segment is for example specified by an URL associated with the segment in a given bitrate. The cell identifier may be for example specified in an HTTP header.

As explained before, the content transmission device 3 obtains segments requested by content consumption devices 2 and sends the obtained segments in response to requests (steps not illustrated).

For respective requests RQ, the content transmission device 3 determines the bitrate BR of the requested segment, and the maximum available bitrate BRₘₐₓ associated with the requested segment (Step S2). This may be determined for example by consulting the manifest file associated with the video content to which the requested segment belongs. The content transmission device 3 may thus be described as an "adaptive streaming aware network node".

Then, for respective cell identifiers, the content transmission device 3 determines statistical data SD in function of the requests RQ received during a time interval (Step S3). More specifically, for each cell identifier specified by at least one request RQ received during the time interval, the statistical data SD specify:
- The cell identifier,
- The number N of content consumption devices 2 from which at least one request has been received during the time interval,
- A statistic value representative of the requested bitrates, for example a mean bitrate BRₘₑₐₙ,
- A statistic value representative of differences between a requested bitrate and a maximum available bitrate, for example a mean difference Δₘₐₙ.

Then, the content transmission device 3 sends the statistical data SD for the respective cell identifiers to the control device 5.

Steps S1 to S4 are repeated for successive time intervals.

**Figure 3** is a flowchart of a method for controlling transmission of video content, executed by the control device 5.

The control device 5 receives statistical data SD from respective content transmission devices 3 (Step T1). In some embodiments, statistical data SD received from various content transmission devices 3 refer to the same cell identifier. In that case the control device 5 consolidates the statistical data SD associated with this cell identifier.

Then, for each cell identifier, the control device 5 determines, in function of the statistical data SD, whether congestion is detected and/or predicted (Step T2). Various techniques may be used for detecting or predicting congestion within a cell in function of the statistical data SD. Also, additional data may be used in some embodiments. For example, the control device 5 may detect and/or predict congestion in function of historical data representative of past congestion in the cellular network 6 and, if available, with network information provided externally and/or other kind of external info (e.g. time of the day, or day of the week, or specific data about events in the area, etc). The control device 5 builds for example a map with the congestion level of all cells and a prediction about how it will evolve.

In an example, the control device 5 determines congestion as follows: If the mean difference Δₘₑₐₙ is below a threshold, the cell is not congested: most content consumption devices 2 are getting top quality, just some of them may be below the maximum because of location (low signal). In contrast, if the mean difference Δₘₑₐₙ is above the threshold for several consecutive time intervals, there is some degree of congestion and actions should be taken. In another example, a sign of congestion may be derived from observing the number of different end devices and the total bitrate delivered for them during an interval (data included in the statistical data SD). If the total bandwidth delivered during an interval (for the whole set of devices) is pretty much independent of the number of devices receiving media during the interval, the cell is congested.

In response to determining that congestion is detected and/or predicted, the control device 5 sends a congestion signal (Step T3). The congestion signal may specify the cell identifier(s) for which congestion has been detected and/or predicted. For example, the congestion signal specifies the above-mentioned map determined by the control device 5. The congestion signal is sent to the content transmission devices 3, for example to the content transmission devices 3 from which statistical data SD associated with the congested cell has been received, or to all content transmission devices 3.

Referring again to Figure 2, in response to receiving a congestion signal (Step S5), a content transmission device 3 adapts the transmission of video content (Step S6). Adapting the transmission of video content may comprise for example:
- The content transmission device 3 proactively delivers segments at a lower bitrate than requested by a content consumption device 2 in a cell which is detected or predicted to be congested. This way the effect of the congestion will not be a stall, but just a jump in quality. This is not always possible (depends on the content consumption device 2, the resolutions and the terminal software) but when it is possible it is very effective.
- The content transmission device 3 does not allow new sessions (Although this may be regarded as a bit drastic).
- The content transmission device 3 sends a lower set of bitrates for new sessions (for example through manifest file manipulation, by removing the higher bitrates specified in the manifest files). If the adaptive streaming protocol enables a dynamic change in this list of bitrates it may also be done for existing sessions. But it is protocol and possibly terminal software dependant.
- The content transmission device 3 harmonizes the bitrates delivered to all content consumption devices 2 in a cell which is detected or predicted to be congested, to avoid races between them which lead to frequent changes and overall worse experience. This harmonization can be achieved from the cache delivery, either throttling the delivery or sending alternative objects than the one that were requested. Throttling is in fact another way of achieving the effect of first bullet above. It consumes more resources for the delivery device but it universally applicable.

In the system 1, the transmission of video content by HTTP adaptive streaming may be adapted to congestion within the cellular network. This improves quality of experience for the users of the content consumption devices 2. Moreover, the congestion may be detected in function of statistical data SD determined in function of the requests sent by the content consumption devices 2. The content transmission devices 3 and control device 5 may detect or predict congestion by using only information transmitted at the application layer. The cellular network 6 does not need to report lower layer network data for allowing the content delivery network 7 to take congestion into account (which otherwise could involve the need of proprietary solutions). Since a content consumption device 2 regularly send requests RQ (content request is repeated every few seconds, the duration of a segment), this analysis is a full real time monitoring of the congestion.

In the system 1, a control device 5 receives statistical data SD from various content transmission device 3 (step T1) and determines/predicts congestion in function of the received statistical data SD (step T2). In another embodiment, a content transmission device 3 performs the congestion detection/prediction itself, similarly to step T2, and adapts the transmission of content when congestion is detected/predicted. In this case, the control device 5, steps S4, S5, T1 and T3 are not necessary.

In an embodiment, a request RQ specifies also the signal strength of the cellular network 6, measured by a content consumption device 2, for example in an HTTP header. This information may be included in the statistical data SD and/or used for detecting/predicting congestion.

**Figure 4** is a structural view of a device which may be a content transmission device 3 and/or a control device 5, and which comprises a processor 8 and a memory 9. The memory 9 stores a computer program P which, when executed by the processor 8, causes the device to execute the method described above with reference to Figure 2 and/or 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of video content, executed by a content transmission device (3), comprising:
- receiving (S1) a plurality of requests (RQ) from content consumption devices (2) though a cellular network (6), wherein a request (RQ) specifies a video portion of a video content and a cell identifier,
- for respective requests (RQ), determining (S2) a requested bitrate (BR) and a maximum available bitrate (BRₘₐₓ) associated with the requested video portion,
- for respective cell identifiers, determining (S3) statistical data (SD) representative of at least one of the number of content consumption devices (2) from which at least one request has been received during a time interval, requested bitrates during said time interval, differences between a requested bitrate and a maximum available bitrate during said time interval.

2. Method according to claim 1, wherein the statistical data (SD) specify a mean requested bitrate during said time interval.

3. Method according to one of claims 1 to 2, wherein the statistical data (SD) specify a mean difference between a requested bitrate and a maximum available bitrate during said time interval.

4. Method according to one of claims 1 to 3, wherein said requested bitrate and maximum available bitrate are determined in function of a manifest file which specifies available portions and bitrates for the video content.

5. Method according to one of claims 1 to 4, comprising (S4) sending said statistical data to a control device and, in response to receiving (S5) a congestion signal which specifies a cell for which congestion has been detected or predicted from said control device, adapting (S6) transmission of video content in said cell.

6. Method according to one of claims 1 to 4, comprising detecting and/or predicting congestion of a cell in function of said statistical data and, in response to said detecting or predicting, adapting transmission of video content in said cell.

7. Method according to claim 5 or 6, wherein adapting (S6) transmission of video content in said cell comprise at least one of:
- sending a video portion at a lower bitrate than requested by a content consumption device (2),
- not allowing new sessions for requesting video content,
- sending a modified manifest file to a content consumption device (2),
- harmonizing the bitrates delivered to respective content consumption devices (2).

8. Method according to one of claims 1 to 7, wherein a request specifies a signal strength.

9. Computer program (P) comprising instructions for performing the method of one of claims 1 to 8 when said instructions are executed by a computer.

10. Content transmission device (3), comprising means (8, 9, P) configured for:
- receiving (S1) a plurality of requests from content consumption devices though a cellular network, wherein a request specifies a video portion of a video content and a cell identifier,
- for respective requests, determining (S2) a requested bitrate and a maximum available bitrate associated with the requested video portion,
- for respective cell identifiers, determining (S3) statistical data representative of at least one of the number of content consumption devices from which at least one request has been received during a time interval, requested bitrates during said time interval, differences between a requested bitrate and a maximum available bitrate during said time interval.

11. Method for controlling transmission of video content, executed by a control device (5), comprising:
- receiving (T1), from a content transmission device (3) according to claim 9, statistical data (SD) associated with a cell identifier and representative of at least one of a number of content consumption devices from which at least one request has been received during a time interval, requested bitrates during said time interval, differences between a requested bitrate and a maximum available bitrate during said time interval,
- for respective cell identifiers, detecting and/or predicting congestion (T2) in function of said statistical data (SD),
- in response to detecting and/or predicting congestion, sending (T3) a congestion signal to said content transmission device (3).

12. Control device (5) comprising means (8, 9, P) configured for:
- receiving, from a content transmission device according to claim 10, statistical data associated with a cell identifier and representative of at least one of a number of content consumption devices from which at least one request has been received during a time interval, requested bitrates during said time interval, differences between a requested bitrate and a maximum available bitrate during said time interval,
- for respective cell identifiers, detecting and/or predicting congestion in function of said statistical data,
- in response to detecting and/or predicting congestion, sending a congestion signal to said content transmission device.

13. System (1) comprising at least one content transmission device (3) according to claim 10 and at least one control device (5) according to claim 12.
